(19) Europäisches Patentamt / European Patent Office / Office européen des brevets

(11) **EP 4 294 688 B1**

(12) **FASCICULE DE BREVET EUROPEEN**

(45) Date de publication et mention
de la délivrance du brevet:
**05.03.2025   Bulletin 2025/10**

(21) Numéro de dépôt: **22701640.9**

(22) Date de dépôt: **26.01.2022**

(51) Classification Internationale des Brevets (IPC):
**B60W 30/08** (2012.01)   **B60W 30/09** (2012.01)
**B60W 30/095** (2012.01)

(52) Classification Coopérative des Brevets (CPC):
**B60W 30/09; B60W 30/08; B60W 30/095;**
B60W 2420/408; B60W 2552/00; B60W 2552/30;
B60W 2552/53; B60W 2554/80; B60W 2554/803

(86) Numéro de dépôt international:
**PCT/EP2022/051699**

(87) Numéro de publication internationale:
**WO 2022/175034 (25.08.2022 Gazette 2022/34)**

(54) **PROCÉDÉ D'ACTIVATION D'UN SYSTÈME D'ÉVITEMENT D'OBSTACLE POUR VÉHICULE AUTOMOBILE**

VERFAHREN ZUM AKTIVIEREN EINES HINDERNISVERMEIDUNGSSYSTEMS FÜR EIN KRAFTFAHRZEUG

METHOD FOR ACTIVATING AN OBSTACLE AVOIDANCE SYSTEM FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **19.02.2021   FR 2101652**

(43) Date de publication de la demande:
**27.12.2023   Bulletin 2023/52**

(73) Titulaires:
• **Ampere SAS**
  **92100 Boulogne-Billancourt (FR)**
• **NISSAN MOTOR CO., LTD.**
  **Yokohama-shi, Kanagawa 221-0023 (JP)**

(72) Inventeurs:
• **BRUNO, Geoffrey**
  **92130 Issy Les Moulineaux (FR)**
• **COSTE, Clement**
  **30000 Nîmes (FR)**
• **DO, Anh-Lam**
  **92160 Antony (FR)**
• **FILIPE, Henri Manuel**
  **75011 Paris (FR)**
• **LEHIM, Marouane**
  **92370 Chaville (FR)**
• **NGUYEN, Khoa Duc**
  **78500 Sartrouville (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
• **LIENKE CHRISTIAN ET AL: "Predictive Driving: Fusing Prediction and Planning for Automated Highway Driving", IEEE TRANSACTIONS ON INTELLIGENT VEHICLES, IEEE, vol. 4, no. 3, 1 September 2019 (2019-09-01), pages 456 - 467, XP011742975, ISSN: 2379-8858, [retrieved on 20190826], DOI: 10.1109/TIV.2019.2919477**
• **KIM JUNSOO ET AL: "Curvilinear-Coordinate-Based Object and Situation Assessment for Highly Automated Vehicles", IEEE TRANSACTIONS ON INTELLIGENT TRANSPORTATION SYSTEMS, IEEE, PISCATAWAY, NJ, USA, vol. 16, no. 3, 1 June 2015 (2015-06-01), pages 1559 - 1575, XP011582800, ISSN: 1524-9050, [retrieved on 20150529], DOI: 10.1109/TITS.2014.2369737**

- **WEISKIRCHER THOMAS ET AL: "Frameworks for interfacing trajectory tracking with predictive trajectory guidance for autonomous road vehicles", 2015 AMERICAN CONTROL CONFERENCE (ACC), AMERICAN AUTOMATIC CONTROL COUNCIL, 1 July 2015 (2015-07-01), pages 477 - 482, XP033184889, DOI: 10.1109/ ACC.2015.7170781**

**Description**

DOMAINE TECHNIQUE DE L'INVENTION

La présente invention concerne de manière générale la détection et l'évitement d'obstacles par un véhicule automobile.

Elle trouve une application particulièrement avantageuse dans le cadre des aides à la conduite de véhicules automobiles.

Elle concerne plus particulièrement un procédé de déclenchement d'un système d'évitement d'obstacle pour un véhicule automobile roulant sur une route, comportant des étapes de :

-	détection d'au moins un objet situé dans l'environnement du véhicule automobile et acquisition de données relatives à chaque objet détecté,
-	détermination, pour ledit au moins un objet, d'un paramètre relatif au temps restant avant que le véhicule automobile ne puisse percuter ledit objet, en fonction des données acquises,
-	détermination d'au moins un écart de trajectoire à réaliser pour éviter ledit au moins un objet, et
-	activation du système d'évitement d'obstacle pour éviter ledit au moins un objet en fonction des valeurs dudit paramètre et de chaque écart de trajectoire associées audit au moins un objet.

ETAT DE LA TECHNIQUE

Dans un souci de sécurisation des véhicules automobiles, on équipe actuellement ces derniers de systèmes d'aide à la conduite ou de systèmes de conduite autonome.

Les documents «C. Lienke, C. Wissing, M. Keller, T. Nattermann and T. Bertram, "Predictive Driving: Fusing Prediction and Planning for Automated Highway Driving," in IEEE Transactions on Intelligent Vehicles, vol. 4, no. 3, pp. 456-467, Sept. 2019, doi: 10.1109/TIV.2019.2919477.» et «J. Kim, K. Jo, W. Lim, M. Lee and M. Sunwoo, "Curvilinear-Coordinate-Based Object and Situation Assessment for Highly Automated Vehicles," in IEEE Transactions on Intelligent Transportation Systems, vol. 16, no. 3, pp. 1559-1575, June 2015, doi: 10.1109/TITS.2014.2369737.» se concentrent respectivement sur le contrôle et la modélisation de l'environnement pour la conduite hautement automatisée.

Parmi ces systèmes, on connait notamment les systèmes de freinage d'urgence automatique (plus connu sous l'abréviation AEB, de l'anglais « Automatic Emergency Braking »), conçus pour éviter toute collision avec des obstacles situés dans la voie empruntée par le véhicule, en agissant simplement sur le système de freinage conventionnel du véhicule automobile.

Il existe toutefois des situations dans lesquelles ces systèmes de freinage d'urgence ne permettent pas d'éviter la collision ou ne sont pas utilisables (par exemple si un autre véhicule suit de trop près le véhicule automobile).

Pour ces situations, il a été développé des systèmes d'évitement automatique (plus connu sous l'abréviation AES, de l'anglais « Advanced Evasive Steering » ou « Automatic Emergency Steering ») qui permettent d'éviter l'obstacle en déviant le véhicule de sa trajectoire, en agissant sur la direction du véhicule.

Pour que cette fonction AES soit efficace, il convient de détecter de façon fiable la partie de l'environnement du véhicule automobile qui est pertinente pour le calcul d'une trajectoire d'évitement optimale.

Plus précisément, au sein d'un environnement perçu par les capteurs du véhicule, il est essentiel d'effectuer un tri de l'information en jugeant de la pertinence, au sens de la fonction AES, des éléments détectés.

Un paramètre généralement utilisé à cet effet est appelé temps avant collision (ou en anglais, « Time-to-collision TTC »).

Un second paramètre est formé par l'écart à réaliser pour passer à côté de l'objet détecté sans venir le percuter.

L'évaluation de ces paramètres est généralement faite en utilisant des hypothèses simplificatrices (par exemple en faisant l'hypothèse que l'obstacle se déplace de façon rectiligne), ce qui aboutit à de mauvaises détections et donc à des déclenchements intempestifs de la fonction AES.

PRÉSENTATION DE L'INVENTION

Afin de remédier à cet inconvénient, la présente invention propose un procédé tel que défini dans l'introduction, dans lequel l'étape de détermination de l'écart latéral comporte :

-	le calcul d'une vitesse latérale relative en fonction de l'écart entre, d'une part, la vitesse latérale du véhicule automobile par rapport à la route dans un repère orienté selon une tangente à la route au niveau du véhicule automobile, et, d'autre part, la vitesse latérale de l'objet par rapport à la route dans un repère orienté selon une tangente à la route au niveau dudit objet, et

- la détermination de chaque écart de trajectoire en fonction de la vitesse latérale relative. L'invention concerne aussi un véhicule automobile équipé d'un calculateur adapté à mettre en œuvre ce procédé.

La vitesse latérale relative est ici définie en fonction d'un écart entre deux termes. Il s'agit en pratique d'une composante latérale de vitesse relative entre le véhicule automobile et un objet, relativement à la route empruntée. L'expression « relativement à la route empruntée » signifie ici que les deux termes sont calculés dans deux repères distincts.

Ainsi, grâce à l'invention, la détermination de l'écart latéral est réalisée en tenant compte de la courbure de la route, de la direction d'avance du véhicule et de la direction d'avance de l'objet détecté. On comprend en effet que si la route est très courbée et que le véhicule automobile et l'objet détecté suivent la courbure de la route sur des voies de circulation distinctes, l'écart latéral calculé sera important quand bien même, à un instant donné, l'objet se trouvera dans l'axe du véhicule automobile.

L'invention permet donc d'éviter de fausses détections de situations dangereuses. Elle permet en outre de détecter très en avance des situations réellement dangereuses.

D'autres caractéristiques avantageuses et non limitatives du procédé conforme à l'invention, prises individuellement ou selon toutes les combinaisons techniquement possibles, sont les suivantes :

- ledit écart de trajectoire est déterminé en fonction également dudit paramètre et/ou en fonction d'un angle formé entre le vecteur vitesse de l'objet et la tangente à la route au niveau dudit objet ;
- l'étape de détermination dudit paramètre comporte le calcul d'une distance d'arc entre le véhicule automobile et ledit objet, le calcul d'une vitesse longitudinale relative en fonction de l'écart entre, d'une part, la vitesse longitudinale du véhicule automobile par rapport à la route dans le premier repère, et, d'autre part, la vitesse longitudinale de l'objet par rapport à la route dans le second repère, le calcul d'une accélération longitudinale relative en fonction de l'écart entre, d'une part, l'accélération longitudinale du véhicule automobile par rapport à la route dans le premier repère, et, d'autre part, l'accélération longitudinale de l'objet par rapport à la route dans le second repère, et la détermination dudit paramètre en fonction de la vitesse longitudinale relative, de l'accélération longitudinale relative et de la distance d'arc ;
- il est prévu une étape de calcul d'un temps de manoeuvre nécessaire pour éviter ledit objet en fonction dudit écart de trajectoire et dans lequel l'activation du système d'évitement d'obstacle est réalisée selon ledit temps de manoeuvre ;
- il est prévu une étape de calcul d'un temps critique relatif au temps restant pour éviter ledit objet en toute sécurité, en fonction du temps de manoeuvre et dudit paramètre, et dans lequel l'activation du système d'évitement d'obstacle est réalisée selon ledit temps critique ;
- pour activer le système d'évitement d'obstacle de telle sorte qu'il réalise l'évitement sans intervention du conducteur du véhicule automobile lorsque plusieurs objets ont été détectés, il est prévu de calculer, pour chaque objet, un temps critique pour éviter ledit objet par la gauche et un temps critique pour éviter ledit objet par la droite, de sélectionner, pour chaque objet, le plus grand des deux temps critiques calculés, puis d'élire le temps critique le plus faible parmi les temps critiques sélectionnés, l'activation du système d'évitement étant réalisée selon ledit temps critique élu ;
- pour activer le système d'évitement d'obstacle de telle sorte qu'il réalise l'évitement compte tenu de l'action du conducteur du véhicule automobile sur le volant lorsque plusieurs objets ont été détectés, il est prévu de calculer, pour chaque objet, un temps critique pour éviter ledit objet par la gauche et un temps critique pour éviter ledit objet par la droite, sélectionner le plus petit des temps critiques calculés pour réaliser un évitement par la gauche, sélectionner le plus petit des temps critiques calculés pour réaliser un évitement par la droite, l'activation du système d'évitement étant réalisée en fonction du moment auquel le conducteur du véhicule automobile initie un évitement et en fonction de l'un des deux temps critiques sélectionnés, à savoir celui qui est associé à un évitement par le côté vers lequel le conducteur du véhicule automobile initie un évitement ;
- il est prévu une étape de filtrage des objets détectés au cours de laquelle on détermine une distance entre chaque objet et une ligne de séparation de voies, on sélectionne les objets dont la vitesse relative latérale est supérieure à un seuil déduit de ladite distance, l'étape de calcul du temps critique étant mise en œuvre uniquement pour les objets sélectionnés ;
- il est prévu une étape de filtrage des objets détectés au cours de laquelle on détermine les positions des objets par rapport à des voies de circulation de la route, on sélectionne les objets situés sur les voies de circulation de la route et pour lesquels le paramètre est inférieur à un seuil prédéterminé, l'étape de calcul du temps critique étant mise en œuvre uniquement pour les objets sélectionnés ;
- pour déterminer la distance entre chaque objet et une ligne de séparation de voies, on utilise un processus récursif en boucle de maillage de la ligne de séparation de voies sur un intervalle de plus en plus réduit à chaque boucle, de calcul d'une distance entre l'objet chaque maille de la ligne de séparation de voie, de détermination de la maille la plus proche de l'objet et de recentrage de l'intervalle autour de cette maille.

L'invention concerne aussi un véhicule automobile comportant au moins une roue directrice, un système de direction de chaque roue directrice adapté à être manœuvré par un actionneur commandé par un calculateur, lequel calculateur est adapté à mettre en œuvre un procédé de déclenchement tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

DESCRIPTION DÉTAILLÉE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

[Fig. 1] est une vue schématique d'un véhicule automobile conforme à l'invention et de deux voitures cibles circulant sur deux voies de circulation distinctes ;

[Fig. 2] est une vue schématique du véhicule automobile de la figure 1 et de l'une des deux voitures cibles ;

[Fig. 3] est une vue homologue de celle illustrée sur la figure 2, illustrant une seconde étape du processus de détermination de la position de l'une des voitures cibles ;

[Fig. 4] est une vue homologue de celle illustrée sur la figure 2, illustrant quatre repères utilisés dans le cadre de l'invention ;

[Fig. 5] est une représentation des quatre repères de la figure 4 ;

[Fig. 6] est une vue schématique de l'une des voitures cibles de la figure 1 et de sa voie de circulation ;

[Fig. 7] est une vue schématique d'un exemple de configuration dans lequel se trouvent le véhicule automobile conforme à l'invention et trois voitures circulant à proximité ;

[Fig. 8] est une vue schématique d'un autre exemple de configuration dans lequel se trouvent le véhicule automobile conforme à l'invention et trois voitures circulant à proximité.

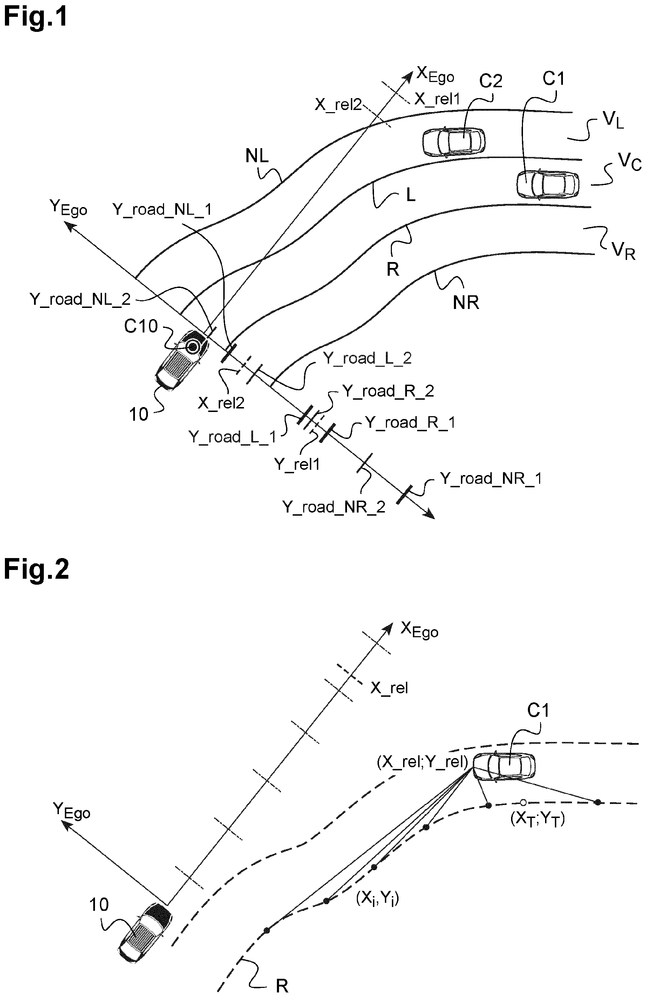

Sur la figure 1, on a représenté un véhicule automobile 10 roulant sur une route sur laquelle se trouve deux « objets » formant des obstacles potentiels pour le véhicule automobile 10. Ici, ces deux objets sont formés par des voitures C1, C2. En variante, il pourrait s'agir d'autres types d'objets (piétons, cyclistes...). Les objets considérés sont de préférence mobiles.

Dans la suite de la description, le véhicule automobile 10 est celui qui mettra en œuvre la présente invention, et il sera appelé « véhicule EGO 10 ».

Ce véhicule EGO 10 comprend classiquement un châssis qui délimite un habitacle, des roues dont deux au moins sont directrices, un groupe motopropulseur, un système de freinage et un système de direction conventionnel permettant d'agir sur l'orientation des roues directrices.

Dans l'exemple considéré, le système de direction est commandé par un actionneur de direction assistée qui permet d'agir sur l'orientation des roues directrices en fonction de l'orientation du volant et/ou, selon les cas, en fonction d'une consigne émise par un calculateur C10.

Le calculateur C10 comporte au moins un processeur, au moins une mémoire et différentes interfaces d'entrée et de sortie.

Grâce à ses interfaces d'entrée, le calculateur C10 est adapté à recevoir des signaux d'entrée provenant de différents capteurs.

Parmi ces capteurs, il est par exemple prévu :

- un dispositif tel qu'une caméra frontale, permettant de repérer la position du véhicule EGO par rapport à sa voie de circulation,
- un dispositif tel qu'un télédétecteur RADAR ou LIDAR, permettant de détecter un obstacle se trouvant sur la trajectoire du véhicule EGO 10,
- au moins un dispositif latéral tel qu'un télédétecteur RADAR ou LIDAR, permettant d'observer l'environnement sur les côtés du véhicule EGO.

Le calculateur C10 reçoit ainsi de plusieurs capteurs des données relatives aux objets présents dans l'environnement du véhicule EGO 10. De manière classique, ces données sont combinées ensemble de façon à fournir des données fusionnées fiables sur chaque objet.

Grâce à ses interfaces de sortie, le calculateur C10 est adapté à transmettre une consigne à l'actionneur de direction assistée.

Il permet ainsi de faire en sorte que le véhicule suive au mieux, et si les conditions le justifient, une trajectoire d'évitement d'obstacle.

Grâce à sa mémoire, le calculateur C10 mémorise des données utilisées dans le cadre du procédé décrit ci-dessous.

Il mémorise notamment une application informatique, constituée de programmes d'ordinateur comprenant des instructions dont l'exécution par le processeur permet la mise en œuvre par le calculateur du procédé décrit ci-après.

Ces programmes comportent notamment un « système AES » qui est conçu pour calculer une trajectoire d'évitement d'obstacle et pour piloter le véhicule EGO 10 de manière qu'il suive cette trajectoire ou pour aider le conducteur à piloter le véhicule EGO 10 de manière qu'il suive cette trajectoire. Le système AES présente un mode autonome dans lequel le suivi de trajectoire se fait sans l'aide du conducteur, et un mode manuel dans lequel le système AES aide le conducteur à éviter l'obstacle et dans lequel le conducteur reste maître de la manoeuvre. Ce système AES étant bien connu de l'Homme de l'art, il ne sera pas décrit ici en détail.

Les programmes informatiques comportent également un logiciel d'activation du système AES, qui va permettre de déterminer si le système AES doit être activé (compte tenu de la trajectoire du véhicule EGO et de celles des objets présents dans son environnement) et d'attendre le meilleur moment pour l'activer. C'est ce logiciel d'activation qui fait ici plus précisément l'objet de la présente invention.

Ce logiciel est actif dès que le véhicule EGO 10 est en mouvement.

Il est mis en œuvre en boucle, à pas de temps réguliers.

Il comporte une étape préalable d'acquisition de données relatives au véhicule EGO 10 et à son environnement, suivie de neuf étapes principales. On peut alors décrire une à une ces étapes successives.

Au cours de l'étape préalable, le calculateur C10 reçoit au moins une image acquise par la caméra frontale du véhicule EGO 10. Il reçoit en outre des données des télédétecteurs. Ces images et données sont alors fusionnées.

A ce stade, le calculateur C10 dispose donc d'une image de la route située à l'avant du véhicule EGO 10 et de données fusionnées qui caractérisent notamment chaque objet détecté et situé dans l'environnement du véhicule EGO 10. Cet environnement est ici considéré comme étant la zone située autour du véhicule EGO, dans laquelle les capteurs du véhicule sont adaptés à acquérir des données.

Dans l'exemple de la figure 1, le véhicule EGO roule sur une voie de circulation centrale $V_C$, de part et d'autre de laquelle se trouvent deux autres voies de circulation $V_R$, $V_L$.

Le calculateur C10 cherche alors à déterminer les positions et formes des lignes de séparation NL, L, R, NR de ces voies de circulation $V_C$, $V_R$, $V_L$.

Pour cela, ici, chacune de ces lignes est modélisée par une équation de forme polynomiale. Ici, le polynôme choisi est d'ordre 3, si bien que l'on peut écrire :

[Math. 1]

$$yLine = d.x^3 + c.x^2 + b.x + a$$

Dans cette équation :

- le terme yLine représente la coordonnée latérale de la ligne de séparation de voie considérée,
- le terme x représentée la coordonnée longitudinale de cette ligne, et
- les termes a, b, c et d sont les coefficients du polynôme, déterminés en fonction de la forme de la ligne vue par la caméra frontale du véhicule EGO (ou acquise par le calculateur C10 dans un système de navigation comportant une cartographie détaillée des lieux dans lesquels le véhicule EGO évolue).

En pratique, ces termes sont fournis par la fusion de données. Il permettent de modéliser la forme des lignes de séparation de voie jusqu'à une distance d'une centaine de mètres environ lorsque les conditions de visibilité sont bonnes.

A ce stade, on notera que dans la suite de cet exposé, un terme qualifié de « longitudinal » correspondra à la composante d'un vecteur selon l'abscisse du repère considéré, et un terme qualifié de « latéral » correspondra à la composante d'un vecteur selon l'ordonnée du repère considéré (les repères ici considérés étant toujours orthonormés).

L'équation [Math. 1] s'exprime ici dans un repère ($X_{EGO}$, $Y_{EGO}$) attaché au véhicule EGO 10 et représenté sur la figure 1. Ce repère est orienté de manière que son axe des abscisses s'étende selon l'axe longitudinal du véhicule EGO 10. Il est centré au niveau du RADAR avant du véhicule EGO 10.

En variante, d'autres modélisations plus simples ou plus complexes des géométries des lignes de séparation de voies pourraient être utilisées.

Une fois les coefficients a, b, c, d déterminés pour chaque ligne de séparation de voie, le calculateur C10 peut mettre en œuvre les neuf étapes du procédé qui vont permettre de percevoir dans quelle mesure les objets détectés sont dangereux pour le véhicule EGO afin de déclencher, au besoin, le système AES d'évitement d'obstacle.

La première étape consiste à déterminer la distance qui sépare le véhicule EGO de l'objet considéré (l'une des voitures C1, C2).

La distance ici calculée n'est pas une distance euclidienne. En effet, on souhaite prendre en compte la forme de la route pour déterminer une distance que le véhicule EGO 10 et l'objet devraient parcourir avant de se percuter.

Le calculateur C10 calcule donc ici une distance d'arc $L_{AB}$.

Pour cela, comme cela par exemple détaillé dans le document FR3077547, le calculateur peut utiliser l'équation suivante :

[Math. 2]

$$L_{AB} = \int_{x_A}^{x_B} \sqrt{1 + \frac{d(Yline)^2}{dx}} \, . \, dx$$

Où :

- $L_{AB}$ est la distance d'un arc entre deux points A et B (correspondant aux positions du véhicule EGO et de l'objet considéré),
- $X_A$ est la position longitudinale du véhicule EGO (au niveau du RADAR), et
- $X_B$ est la position longitudinale de l'objet considéré, dans le repère ($X_{EGO}$, $Y_{EGO}$).

La seconde étape consiste à déterminer la position de chaque objet détecté par rapport aux voies de circulation de la route, compte tenu de l'équation de chaque ligne de séparation de voie et des données fusionnées.

Le calculateur C10 connaît les coordonnées, dans le repère ($X_{EGO}$, $Y_{EGO}$) attaché au véhicule EGO, d'un point caractéristique de chaque objet détecté (ci-après appelé « point d'ancrage »). Ce point caractéristique est typiquement le centre de l'objet vu par la caméra frontale ou par le télédétecteur RADAR. On considérera ici qu'il s'agit du milieu de la calandre de la voiture C1, C2

Dans l'exemple de la figure 1 où deux objets ont été détectés (les deux voitures C1, C2), les coordonnées des points d'ancrage sont respectivement référencées (X_rel1, Y_rel1) et (X_rel2, Y_rel2).

Sur cette figure 1, on a également représenté sur l'axe des ordonnées du repère ($X_{EGO}$, $Y_{EGO}$) les valeurs suivantes :

- Y_road_NL_1, qui est la valeur du terme yLine de l'équation [Math. 1] de la ligne de séparation de voie NL, au point d'abscisse X_rel1,
- Y_road_NL_2, qui est la valeur du terme yLine de l'équation [Math. 1] de la ligne de séparation de voie NL, au point d'abscisse X_rel2,
- Y_road_L_1, qui est la valeur du terme yLine de l'équation [Math. 1] de la ligne de séparation de voie L, au point d'abscisse X_rel1,
- Y_road_L_2, qui est la valeur du terme yLine de l'équation [Math. 1] de la ligne de séparation de voie L, au point d'abscisse X_rel2,
- Y_road_R_1, qui est la valeur du terme yLine de l'équation [Math. 1] de la ligne de séparation de voie R, au point d'abscisse X_rel1,
- Y_road_R_2, qui est la valeur du terme yLine de l'équation [Math. 1] de la ligne de séparation de voie R, au point d'abscisse X_rel2,
- Y_road_NR_1, qui est la valeur du terme yLine de l'équation [Math. 1] de la ligne de séparation de voie NR, au point d'abscisse X_rel1,
- Y_road_NR_2, qui est la valeur du terme yLine de l'équation [Math. 1] de la ligne de séparation de voie NR, au point d'abscisse X_rel2.

Alors, en comparant ces valeurs avec les coordonnées latérales Y_rel1, Y_rel2 des voitures C1, C2, il est possible de déterminer sur quelle voie de circulation se trouve chacune de ces deux voitures.

A titre d'exemple, la coordonnée latérale Y_rel1 de la voiture C1 se trouve ici comprise entre les valeurs Y_road_R_1 et Y_road_L_1, ce qui signifie que cette voiture se trouve entre les lignes de séparation de voies L et R.

A ce stade, le calculateur C10 peut ainsi savoir dans quelle voie de circulation $V_L$, $V_C$, $V_R$ se trouve chaque objet détecté.

La troisième étape vise à déterminer des paramètres caractérisant la cinématique de chaque objet par rapport aux lignes de séparation de voies.

Dans la suite de la description de cette étape, on ne s'intéressera qu'à un seul de ces objets (la voiture C1), pour des raisons de clarté de l'exposé.

Cette étape comprend une première sous-étape au cours de laquelle le calculateur C10 détermine la position de l'objet par rapport à l'une des lignes de séparation de voies. La ligne de séparation de voie considérée est préférentiellement celle qui sépare la voie de circulation centrale de la voie de circulation sur laquelle se trouve l'objet considéré.

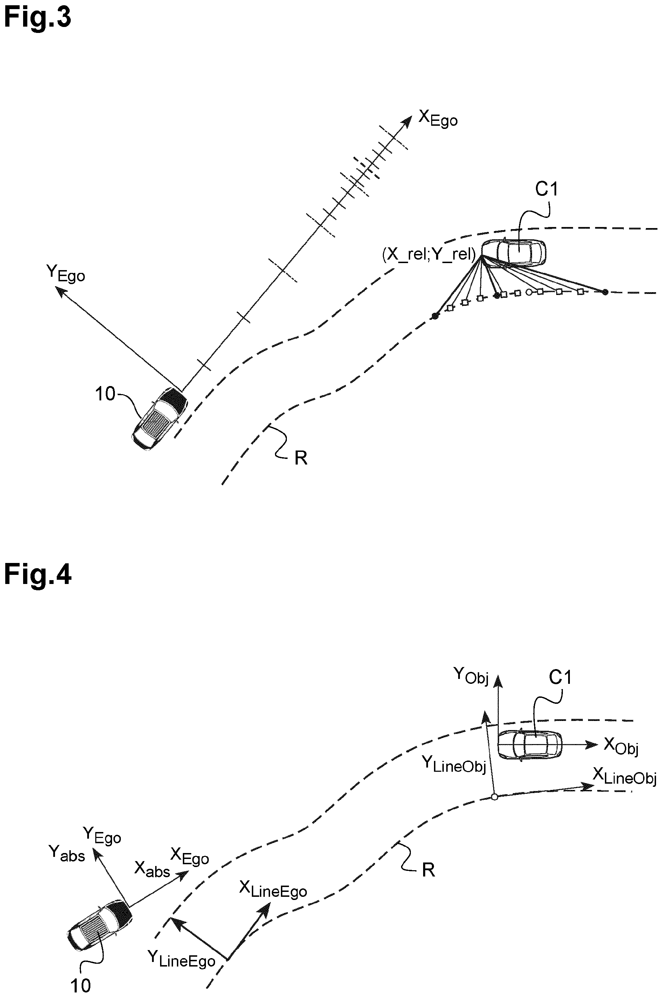

En variante, la ligne de séparation de voie considérée pourrait être une autre ligne, par exemple une ligne de bord de voie (voir figures 2 et 3), notamment si aucune ligne n'est détectée entre la voie de circulation de l'objet et celle du véhicule EGO 10.

L'idée consiste à discrétiser un intervalle de cette ligne de séparation de voies en un nombre N fini de points, puis à sélectionner celui qui est le plus proche de l'objet considéré. Cette opération est réalisée plusieurs fois en rediscrétisant la ligne de séparation de voie sur un intervalle à chaque fois réduit et situé de part et d'autre du point sélectionné afin, à terme, de trouver une bonne estimation du point de la voie de circulation qui est le plus proche de l'objet considéré.

En pratique, comme le montre la figure 2, le calculateur commence par discrétiser la ligne de séparation de voie R en N points de coordonnées $(X_i, Y_i)$ dans le repère du véhicule EGO 10. Ces points sont régulièrement répartis le long de cette ligne (en pratique, l'intervalle entre deux points consécutifs le long de l'axe $X_{EGO}$ est toujours le même), un premier des points étant situé à la hauteur du véhicule EGO (avec une abscisse nulle) ou à une première distance prédéterminée de celui-ci, et le dernier des points étant situé à une seconde distance prédéterminée du véhicule EGO.

Puis, connaissant les coordonnées ici notées $(X_{rel} ; Y_{rel})$ du point d'ancrage de la voiture C1, le calculateur peut en déduire la distance euclidienne $Bird_{Distance}$ entre chaque point de discrétisation de la ligne de séparation de voie R et le point d'ancrage de la voiture C1, à l'aide de l'équation :

[Math. 3]

$$Bird_{Distance}(X_i, Y_i) = \sqrt{(X_i - X_{rel})^2 + (Y_i - Y_{rel})^2}$$

Le point de discrétisation pour lequel la distance euclidienne $Bird_{Distance}$ est la plus faible est celui qui est le plus proche de la voiture C1. Ce point de coordonnées $(X_s, Y_s)$ est donc sélectionné.

Puis, comme le montre la figure 3, cette opération de discrétisation est répétée sur un intervalle plus petit et avec une discrétisation plus fine. Les bornes de l'intervalle sont de préférence formées par les points de coordonnées $(X_{s-1}, Y_{s-1})$ et $(X_{s+1}, Y_{s+1})$. Le nombre de points de discrétisation est de préférence encore égal à N. Cette nouvelle opération permet alors de sélectionner un nouveau point de coordonnées $(X_s, Y_s)$.

Passé un certain nombre de boucles (par exemple 10) ou lorsque l'intervalle entre deux points de discrétisation est suffisamment faible (par exemple inférieur à 10 cm), le calculateur cesse de répéter ces opérations en boucle.

Le dernier point à avoir été sélectionné est appelé « point de projection F ». On considère que c'est une bonne approximation du point de la ligne de séparation qui est le plus proche de la voiture C1.

La valeur de l'abscisse $X_s$ de ce point est appelée $Distance_{Xproj}$.

La valeur de la distance euclidienne $Bird_{Distance}$ entre le point de projection F et la voiture C1 est appelée $Dist_{Target2Lane}$.

Une seconde sous-étape consiste pour le calculateur C10 à déterminer la vitesse du véhicule EGO dans un repère attaché à la route et situé à hauteur de ce véhicule EGO 10, et la vitesse de la voiture C1 dans un repère attaché à la route et situé à hauteur de cette voiture C1.

Dans cette sous-étape, on va formuler l'hypothèse selon laquelle, à partir du point de projection F, la route suit la tangente en ce point. On la considère donc droite à partir de la voiture C1.

Pour bien comprendre les calculs, on a représenté sur la figure 4 quatre repères utilisés dans la suite de cet exposé.

Le premier repère est le repère $(X_{EGO}, Y_{EGO})$ déjà présenté, qui est attaché au véhicule EGO.

On notera que ce repère avance en même temps que le véhicule EGO 10. On a donc également représenté un repère absolu $(X_{abs}, Y_{abs})$ qui se confond, à l'instant des mesures, avec le premier repère mais qui est considéré comme fixe.

Un autre repère est noté $(X_{lineEGO}, Y_{lineEGO})$ ; il est attaché à la ligne de séparation de voies R, est orienté de façon que son abscisse soit tangente à cette ligne, et il est centré au niveau du RADAR du véhicule EGO (l'abscisse de ce RADAR est nulle dans le second repère).

Encore un autre repère est noté $(X_{Obj}, Y_{Obj})$ ; il est attaché à la voiture C1, est orienté de façon que son abscisse soit alignée avec la direction d'avancement de la voiture C1, et il est centré au niveau du point d'ancrage de cette voiture C1.

Un dernier repère est noté ($X_{LinObj}$, $Y_{LineObj}$) ; il est attaché à la ligne de séparation de voies R, est orienté de façon que son abscisse soit tangente à cette ligne, et il est centré au niveau du point d'ancrage de la voiture C1.

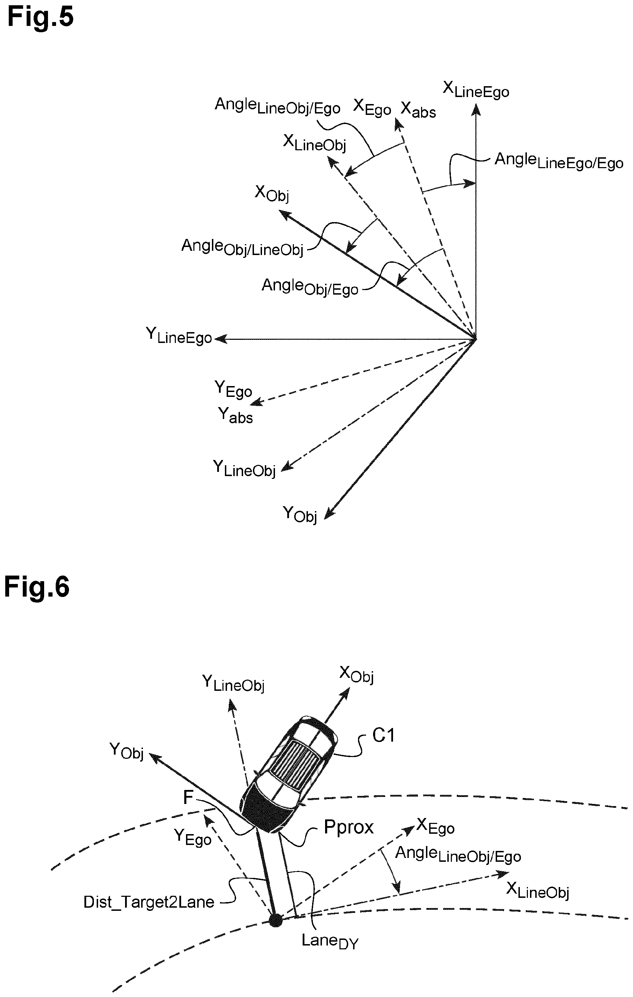

Sur la figure 5, on a représenté les angles séparant ces repères :

- Angle$_{lineEGO/EGO}$ permet de passer du repère ($X_{EGO}$, $Y_{EGO}$) au repère ($X_{lineEGO}$, $Y_{lineEGO}$),
- Angle$_{lineObj/EGO}$ permet de passer du repère ($X_{EGO}$, $Y_{EGO}$) au repère ($X_{LineObj}$, $Y_{LineObj}$),
- Angle$_{obj/EGO}$ permet de passer du repère ($X_{EGO}$, $Y_{EGO}$) au repère ($X_{Obj}$, $Y_{Obj}$),
- Angle$_{Obj/LineObj}$ permet de passer du repère ($X_{LineObj}$, $Y_{LineObj}$) au repère ($X_{Obj}$, $Y_{Obj}$).

On appellera plus généralement Angle$_{LineX/EGO}$ l'angle séparant l'abscisse du repère ($X_{EGO}$, $Y_{EGO}$) et la tangente à la ligne de séparation de voie R, au point d'abscise X (exprimé dans le repère ($X_{EGO}$, $Y_{EGO}$)).

On peut alors écrire :

[Math. 4]

$$Angle_{LineX/Ego} = arctan(d(yLine(x))/dx)$$

Avec:

[Math. 5]

$$\frac{d(yLine(x))}{dx} = 3.d.x^2 + 2.c.x + b$$

Alors, pour x = 0, on peut écrire :

[Math. 6]

$$Angle_{LineX/Ego} = Angle_{LineEgo/Ego} = arctan(b)$$

Au point d'abscisse x = Distance$_{Xproj}$, on peut écrire :

[Math. 7]

$$Angle_{Obj/LineObj} = Angle_{Obj/Ego} - Angle_{LineObj/Ego}$$

Le calculateur peut calculer les composantes longitudinale Vx$_{EGO/LineEGO}$ et latérale Vy$_{EGO/LineEGO}$ de la vitesse du véhicule EGO 10 dans le repère ($X_{LineEGO}$, $Y_{LineEGO}$) au moyen des formules suivantes :

[Math. 8]

$$Vx_{Ego/LineEgo} = V_{Ego/abs} * \cos(Angle_{V_{Ego}/Ego} - Angle_{LineEgo/Ego})$$

[Math. 9]

$$Vy_{Ego/LineEgo} = V_{Ego/abs} * \sin(Angle_{V_{Ego}/Ego} - Angle_{LineEgo/Ego})$$

Dans ces formules :

- $V_{EGO/abs}$ est la vitesse du véhicule EGO 10 dans le repère absolu ($X_{abs}$, $Y_{abs}$), mesurée par exemple par les capteurs situés au niveau des essieux du véhicule ;
- $Angle_{VEgo/Ego}$ est l'angle du vecteur vitesse du véhicule EGO 10 par rapport à l'abscisse du repère ($X_{EGO}$, $Y_{EGO}$). Cet angle est ici supposé nul.

Le calculateur peut aussi calculer les composantes longitudinale $Vx_{Obj/abs}$ et latérale $Vy_{Obj/abs}$ de la vitesse $V_{obj/abs}$ de la voiture C1 dans le repère absolu. Il utilise pour cela les formules suivantes :

[Math. 10]

$$V x_{Obj/abs} = V x_{Obj/Ego} + V x_{Ego/abs}$$

[Math. 11]

$$V y_{Obj/abs} = V y_{Obj/Ego} + V y_{Ego/abs}$$

Dans ces formules :

- $Vx_{EGO/abs}$ et $Vy_{EGO/abs}$ sont les composantes de la vitesse du véhicule EGO 10 le long de l'abscisse et de l'ordonnée du repère absolu ($X_{abs}$, $Y_{abs}$), et
- $Vx_{Obj/EGO}$ et $Vy_{Obj/EGO}$ sont les composantes de la vitesse de la voiture C1 par rapport au véhicule EGO 10 le long de l'abscisse et de l'ordonnée du repère ($X_{EGO}$, $Y_{EGO}$).

On peut alors écrire :

[Math. 12]

$$V_{obj/abs} = \sqrt{V x_{Obj/abs}^2 + V y_{Obj/abs}^2}$$

Comme le montrent les deux équations suivantes, on peut, à partir des angles $Angle_{LineObj/Ego}$ et $Angle_{LineEgo/Ego}$, déterminer les composantes $Vx_{Obj/lineObj}$, $Vy_{Obj/lineObj}$ de la vitesse relative « suivant la ligne de séparation de voie R » de la voiture C1 par rapport à cette ligne au point de projection F, ce qui permet une meilleure représentativité de l'information.

[Math. 13]

$$V x_{Obj/LineObj} = V_{obj/abs} * \cos \left( Angle_{V_{Obj}/Obj} + Angle_{Obj/Ego} - Angle_{LineObj/Ego} \right)$$

[Math. 14]

$$V y_{Obj/LineObj} = V_{obj/abs} * \sin \left( Angle_{V_{Obj}/Obj} + Angle_{Obj/Ego} - Angle_{LineObj/Ego} \right)$$

Dans ces deux équations, $Angle_{VObj/Obj}$ est l'angle du vecteur vitesse de la voiture C1 dans le repère attaché à cette voiture, et $Angle_{Obj/Ego}$ est l'angle de cap de la voiture dans le repère ($X_{EGO}$, $Y_{EGO}$).

En pratique, on fait ici l'hypothèse que le vecteur vitesse de l'objet est colinéaire à son angle de cap, de sorte que l'angle $Angle_{VObj/Obj}$ est nul.

On applique un processus similaire pour déterminer les accélérations relatives « suivant la ligne de séparation de voie R » entre le véhicule EGO et cette ligne au point d'abscisse nulle et entre la voiture C1 et cette ligne au point de projection F.

Ainsi, le calculateur peut calculer les composantes longitudinale $Ax_{EGO/LineEGO}$ et latérale $Ay_{EGO/LineEGO}$ de l'accélération du véhicule EGO 10 dans le repère ($X_{LineEGO}$, $Y_{LineEGO}$) au moyen des formules suivantes :

[Math. 15]

$$Ax_{Ego/LineEgo} = A_{Ego/abs} * \cos\left(Angle_{V_{Ego/Ego}} - Angle_{LineEgo/Ego}\right)$$

[Math. 16]

$$Ay_{Ego/LineEgo} = A_{Ego/abs} * \sin\left(Angle_{V_{Ego/Ego}} - Angle_{LineEgo/Ego}\right)$$

Le calculateur peut aussi calculer les composantes longitudinale $Ax_{Obj/LineObj}$ et latérale $Ay_{Obj/LineObj}$ de l'accélération de la voiture C1 dans le repère ($X_{LineObj}$, $Y_{LineObj}$) au moyen des formules suivantes :

[Math. 17]

$$Ax_{Obj/LineObj} = A_{obj/abs} * \cos\left(Angle_{V_{Obj/Obj}} + Angle_{Obj/Ego} - Angle_{LineObj/Ego}\right)$$

[Math. 18]

$$Ay_{Obj/LineObj} = A_{obj/abs} * \sin\left(Angle_{V_{Obj/Obj}} + Angle_{Obj/Ego} - Angle_{LineObj/Ego}\right)$$

Dans ces formules :

- $A_{EGO/abs}$ est l'accélération absolue du véhicule EGO 10 dans le repère absolu ;
- $A_{Obj/abs}$ est l'accélération absolue de la voiture C1 dans le repère absolu.

On peut alors combiner les vitesses calculées et les accélérations calculées afin d'obtenir les composantes longitudinales $VRelRoute_{Longi}$, $ARelRoute_{Longi}$ et latérales $VRelRoute_{Lat}$, $ARelRoute_{Lat}$ de la vitesse relative et de l'accélération relative du véhicule EGO et de la voiture C1, relatives à la route empruntée, à l'aide des quatre équations définies ci-après.

En pratique, on considère que la composante longitudinale $VRelRoute_{Longi}$ de la vitesse relative entre le véhicule EGO et la voiture C1 est égal à l'écart entre, d'une part, la composante longitudinale de la vitesse du véhicule EGO exprimée dans le repère ($X_{LineEGO}$, $Y_{LineEGo}$) attaché à la voie de circulation au niveau du véhicule EGO, et, d'autre part, la composante longitudinale de la vitesse de la voiture C1 exprimée dans le repère ($X_{LineObj}$, $Y_{LineObj}$) attaché à la voie de circulation au niveau de la voiture C1.

De la même façon, on considère que la composante latérale $VRelRoute_{Lat}$ de la vitesse relative entre le véhicule EGO et la voiture C1 est égal à l'écart entre, d'une part, la composante latérale de la vitesse du véhicule EGO exprimée dans le repère ($X_{LineEGO}$, $Y_{LineEGO}$) attaché à la voie de circulation au niveau du véhicule EGO, et, d'autre part, la composante latérale de la vitesse de la voiture C1 exprimée dans le repère ($X_{LineObj}$, $Y_{LineObj}$) attaché à la voie de circulation au niveau de la voiture C1.

On peut donc écrire :

[Math. 19]

$$VRelRoute_{Longi} = Vx_{Obj/LineObj} - Vx_{Ego/LineEgo}$$

[Math. 20]

$$VRelRoute_{Lat} = Vy_{Obj/LineObj} - Vy_{Ego/LineEgo}$$

On peut calculer les composantes de l'accélération de façon similaire :

[Math. 21]

$$ARelRoute_{Longi} = Ax_{Obj/LineObj} - Ax_{Ego/LineEgo}$$

[Math. 22]

$$ARelRoute_{Lat} = Ay_{Obj/LineObj} - Ay_{Ego/LineEgo}$$

Comme cela apparaîtra en détail dans la suite de cet exposé, l'utilisation des vitesses relatives permet de fournir des indications sur les risques de collision qu'il serait difficile d'obtenir autrement.

A ce stade, on peut rappeler que le calculateur C10 connaît la valeur de la distance $DiSt_{Target2Lane}$ entre la ligne de séparation de voie (au niveau du point de projection F) et le point d'ancrage de la voiture C1.

Au cours d'une troisième sous-étape, le calculateur C10 va déterminer la distance $Lane_{DY}$ entre le point de projection F et le point $P_{prox}$ de la voiture C1 le plus proche de la ligne de séparation de voie R (voir figure 6).

Il calcule ici cette distance au moyen de l'équation suivante.

[Math. 23]

$$Lane_{DY} = Dist_{Target2Lane} -$$

$$sign(Dist_{Target2Lane}).\frac{Width}{2} \; abs(\cos(Angle_{Obj/LineObj}))$$

Dans cette équation, le terme Width correspondant à la largeur de la voiture C1.

L'ensemble des calculs permet alors de déterminer, au cours d'une quatrième sous-étape, un temps avant collision TTC avec l'objet considéré (la voiture C1), c'est-à-dire le temps nécessaire au véhicule EGO pour venir percuter la voiture C1 si ces derniers conservent leurs vitesses.

En effet, à ce stade, le calculateur connaît de l'équation [Math. 2] la longueur $L_{AB}$ de l'arc séparant le véhicule EGO 10 de la voiture C1. Il connaît également de l'équation [Math. 19] la composante longitudinale $VRelRoute_{Longi}$ de la vitesse relative entre le véhicule EGO 10 et la voiture C1 rapportée à la forme de la route. Il connaît enfin de l'équation [Math. 21] la composante longitudinale $ARelRoute_{Longi}$ de l'accélération correspondante.

L'utilisation de ces composantes longitudinales permet, lorsque la route est courbée et que les véhicules n'ont pas des trajectoires parallèles, d'obtenir une bonne approximation du temps avant collision TTC.

Ici, le calculateur C10 détermine alors le temps avant collision TTC recherché à l'aide de l'équation suivante :

[Math. 24]

$$TTC = \frac{-VRelRoute_{Longi} + \sqrt{VRelRoute_{Longi}^2 + 2*ARelRoute_{Longi}*L_{AB}}}{ARelRoute_{Longi}}$$

On notera que deux conditions de validité de cette équation doivent au préalable être vérifiées. Ces conditions sont les suivantes.

[Math. 25]

$$VRelRoute_{Longi}^2 + 2 * ARelRoute_{Longi} * L_{AB} \geq 0 \ et \ ARelRoute_{Longi} \neq 0$$

En revanche, si la composante longitudinale $ARelRoute_{Longi}$ de l'accélération relative est nulle, on peut écrire :

[Math. 26]

$$TTC = \frac{L_{AB}}{VRelRoute_{Longi}}$$

En résumé, à ce stade, le calculateur dispose, grâce à l'exploitation des données fusionnées, de différents paramètres caractérisant les différents objets se trouvant dans son environnement et qui sont autant d'obstacles potentiels se trouvant sur sa trajectoire. Il dispose notamment, pour chaque objet :

- du temps avant collision TTC (équation [Math. 24]),
- de la position de l'objet sur la route (déterminée au cours de l'étape 2), et
- d'une information de confirmation d'existence de l'objet (fournie lors de l'étape de fusion des données).

Alors, au cours d'une quatrième étape, le calculateur C10 va effectuer un premier filtrage des différents objets détectés en fonction des paramètres dont il dispose de façon à ne conserver que ceux qui sont pertinents pour la mise en œuvre de la fonction AES (c'est-à-dire ceux qui forment des obstacles potentiels).

L'opération de filtrage consiste ainsi à considérer que les objets pertinents (ci-après appelés « cibles ») sont ceux dont l'existence a été validée lors de la fusion de données, dont la position est potentiellement dangereuse (dans notre exemple, cela revient à vérifier que les objets se trouvent sur l'une des voies de circulation) et pour lesquels le temps avant collision TTC est inférieur à un seuil prédéterminé.

Si plusieurs cibles sont détectées sur une même voie de circulation, il est aussi possible de ne considérer qu'un nombre restreint d'entre elles (par exemple 4), à savoir celles pour lesquelles les distances au véhicule EGO 10 sont les plus faibles.

La cinquième étape consiste, pour le calculateur C10, à identifier pour chacune de ces cibles, un écart (ou, en anglais « overlap ») nécessaire pour éviter cette cible par la droite et par la gauche si cette dernière conservait sa trajectoire relative à la route.

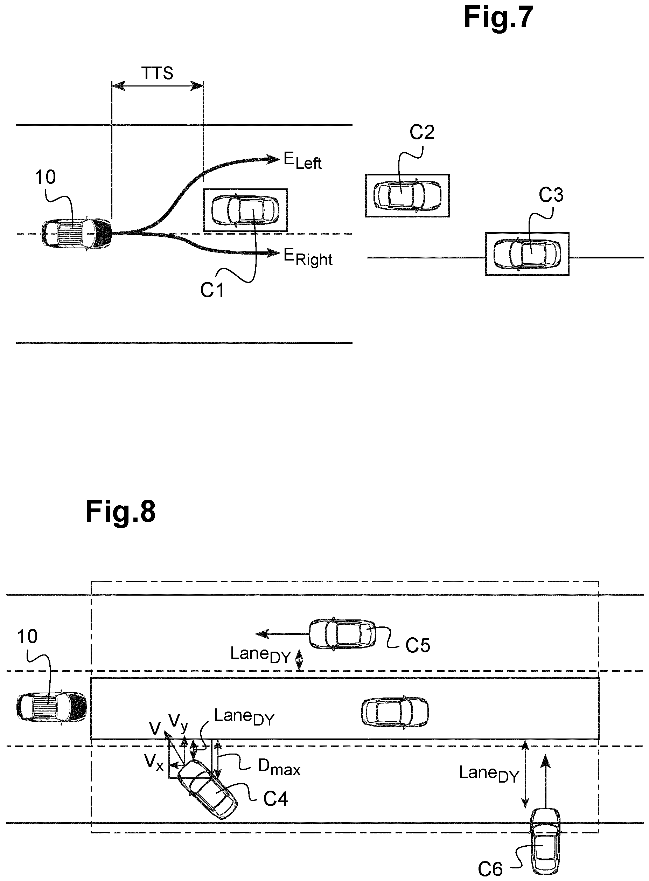

Sur la figure 7, on a représenté un exemple de trois cibles pour lesquelles les écarts sont définis dans le tableau suivant :

[Tab. 1]

| Cible | $E_{left}$ | $E_{right}$ |
|-------|------------|-------------|
| $C_1$ | 3.5 | 1.5 |
| $C_2$ | 4 | 1 |
| $C_3$ | 0.5 | 4.5 |

La détermination de ces écarts droit $E_{left}$ et gauche $E_{right}$ est réalisée compte tenu de la trajectoire du véhicule EGO 10 et des données fusionnées. On observe sur la figure 7 que chaque cible est encadrée par un rectangle, qui peut correspondre à une zone de sécurité plus grande que la cible à l'intérieur de laquelle on ne souhaite pas que le véhicule EGO 10 rentre.

L'exemple de la figure 7 correspond à un cas dans lequel le véhicule EGO et les cibles se déplacent en ligne droite.

Dans le cas où la route n'est pas droite, on propose d'affiner les calculs en prenant en compte les informations suivantes :

- la composante latérale $VRelRoute_{Lat}$ de la vitesse relative entre le véhicule EGO et la cible considérée, le long de la route empruntée (équation [Math. 20]),
- l'angle $Angle_{Obj/LineObj}$, et
- le temps avant collision TTC.

La première de ces informations permet de tenir compte de la vitesse latérale réelle entre le véhicule EGO 10 et la cible, compte tenu de la forme de la voie de circulation.

Pour bien comprendre l'intérêt de ce paramètre, on peut considérer un exemple dans lequel le véhicule EGO et la cible circulent sur deux voies de circulation distinctes, en sens inverse, en suivant bien les courbures de ces deux voies de circulation. On comprend alors qu'en théorie, les risques d'accident sont nuls. Dans notre exemple, la composante latérale VRelRoute$_{Lat}$ de la vitesse relative du véhicule EGO par rapport à la cible sera nulle, si bien que l'écart calculé sera nul, ce qui exprime bien l'idée d'un risque de collision théoriquement nul.

En d'autres termes, la composante latérale VRelRoute$_{Lat}$ et la durée avant collision TTC permettent de pondérer l'influence des vitesses latérales et longitudinales relatives sur le calcul des écarts droit et gauche E$_{right}$, E$_{left}$.

De même, l'information Angle$_{Obj/LineObj}$ permet de déterminer une valeur plus précise de la surface d'impact de la cible considérée, en pondérant les longueur et largeur du véhicule.

Le calcul de ces écarts droit et gauche E$_{right}$, E$_{left}$ est ici réalisé d'une façon homologue à celle décrite dans le document FR1907351, à la différence près que ces calculs permettent de tenir compte des trois informations précitées.

Ainsi, le calcul de la demi-largeur de la cible sera effectué en fonction de l'information Angle$_{Obj/LineObj}$. Cette demi-largeur est alors utilisée pour calculer une valeur préalable pour chaque écart, qui ne prenne pas en compte de rayon de sécurité pour éviter la cible. La composante latérale VRelRoute$_{Lat}$ est quant à elle multipliée par le temps avant collision TTC pour ensuite être ajouté à cet écart préalable afin d'obtenir les écarts souhaités.

En d'autres termes, si on considère le document FR1907351, pour calculer les écarts, il faudra utiliser dans le calcul de la coordonnée latérale dVy le produit de la composante latérale VRelRoute$_{Lat}$ avec le temps avant collision TTC. La coordonnée Y$_a$ utilisée dans ce document (qui correspond ici à la coordonnée Y$_{rel}$) sera quant à elle considérée égale à la somme de la coordonnée résultant de la fusion de données et d'un terme égal au produit de la longueur de la cible par le cosinus de l'angle Angle$_{Obj/LineObj}$.

Ainsi, on peut alors écrire :

[Math. 27]

$$E_{left} = Y_a + er + Long.\cos\left(Angle_{Obj_{LineObj}}\right) + VRelRoute_{Lat}.TTC$$

Dans cette équation, er est un terme permettant de compenser des erreurs de mesure latérale, et Long est la longueur de la cible.

[Math. 28]

$$E_{right} = Y_a + er - Long.\cos\left(Angle_{Obj_{LineObj}}\right) + VRelRoute_{Lat}.TTC$$

Dans le cas où la fusion de données est utilisée, le terme er prend aussi en compte l'erreur provenant de la fusion de données. Ce terme est prédéterminé et mémorisé dans une mémoire du calculateur.

La sixième étape consiste, pour le calculateur, à réaliser un second filtrage parmi les cibles, pour distinguer celles qui sont critiques des autres.

Une cible sera qualifiée de critique si elle nécessite l'activation de la fonction AES pour être évitée. La cible la plus critique (cible MCT) est celle nécessitant l'activation de la fonction AES le plus tôt.

Une cible sera qualifiée « à risque modéré » si sa position est telle qu'elle doit être prise en compte lors de la détermination de la trajectoire d'évitement à suivre. Ainsi, une cible à risque modéré est susceptible d'empêcher l'activation de la fonction AES.

L'idée est de considérer successivement chaque cible détectée de façon indépendante (et donc indépendamment de son environnement).

Pour commencer, le calculateur C10 considère que toutes les cibles situées sur la voie de circulation du véhicule EGO 10 sont critiques.

S'agissant des cibles se trouvant sur les voies adjacentes à celle empruntée par le véhicule EGO 10, le calculateur contrôle si elles respectent des critères supplémentaires.

Ici, ces critères sont liés aux paramètres suivants :

- la distance d'arc L$_{AB}$,

- la distance $Lane_{DY}$ entre le point de projection F et le point de la cible qui est le plus proche de la ligne de séparation de voie (équation [Math. 23]), et
- la composante latérale $Vy_{Obj/lineObj}$ de la vitesse de la cible par rapport à la ligne de séparation de voie au niveau du point de projection F (équation [Math. 14]).

Sur la figure 8, on a représenté trois cibles C4, C5, C6 se trouvant sur deux voies adjacentes à celle empruntée par le véhicule EGO 10.

Pour déterminer si chaque cible est critique ou non, le calculateur vérifie si les deux conditions i) et ii) suivantes sont réunies.

Pour vérifier la première condition i), le calculateur commence par calculer la distance $Lane_{DY}$ entre la cible et la ligne de séparation de voie considérée (équation [Math. 23]). Cela permet de savoir si la cible est plutôt proche ou au contraire éloignée de la ligne de séparation de voie considérée.

Le calculateur C10 en déduit un seuil minimum de vitesse latérale, noté $Vy_{seuilMin}$.

Puis, si la composante $Vy_{Obj/lineObj}$ dépasse le seuil minimum $Vy_{seuilMin}$, alors la première condition (pour considérer la cible comme critique) est validée. Dans le cas contraire, la cible est simplement considérée comme étant à risque modéré.

On notera que le seuil utilisé est donc une variable qui est fonction de la distance entre la cible et la ligne de séparation de voie considérée, ce qui permet de tenir compte du fait que plus cette distance est faible, plus le risque de collision est important.

Le seuil utilisé pourra en outre dépendre de la manière selon laquelle la cible était caractérisée au pas de temps précédent (critique ou non critique). L'idée est en effet que la caractérisation de la cible ne varie pas à chaque pas de temps, du fait de bruits dans les mesures des données à fusionner. Pour cela, le seuil utilisé pour que la cible passe de non-critique à critique est plus haut que celui utilisé pour que la cible passe de critique à non-critique (à la manière d'une fonction d'Hystérésis).

Cette condition i) peut alors être formulée autrement. Ainsi, dans l'exemple de la figure 8, on peut alors choisir de définir une ligne virtuelle de séparation de voie qui est sensiblement parallèle à la ligne de séparation de voie considérée, mais écartée de cette dernière, du côté de la voie de circulation du véhicule EGO.

L'écart est alors choisi en fonction d'un paramètre « TimeToCross » multiplié par la vitesse latérale considérée. Avec par exemple un paramètre « TimeToCross » de 1 seconde, si la vitesse latérale considérée est de 1,2m/s, on obtient un écart de 1,2m. Alors, le franchissement de cette ligne correspond à une validation de la condition i).

On notera que la forme de cette ligne virtuelle peut être parallèle à la ligne de séparation de voie de référence ou y être parallèle seulement depuis la cible jusqu'à midistance avec le véhicule EGO, puis s'évaser lentement vers le véhicule EGO afin de se rapprocher de la ligne de référence.

La seconde condition ii) permet de ne pas prendre en compte les cibles issues de possibles erreurs de perception, ainsi que celles ayant des vitesses latérales trop importantes ou aberrantes. Pour cela, le calculateur compare la valeur absolue de la composante latérale $Vy_{Obj/lineObj}$ avec un seuil maximum $V_{YseuilMax}$ prédéterminé. Si cette composante est supérieure au seuil maximum, la seconde condition n'est pas validée et la cible est considérée comme étant à risque modéré. Le seuil maximum doit être restrictif de façon à ne pas considérer les fausses détections qui ont parfois des valeurs démesurées.

Ce seuil maximum est de préférence supérieur à 2m/s, préférentiellement égal à 3m/s.

Les cibles qui ne remplissent pas l'une et/ou l'autre des conditions i) et ii) sont considérées comme des cibles à risque modéré. Les autres cibles sont considérées comme étant critiques.

La classification des cibles perçues en cibles critiques et en cibles à risque modéré permet de réduire les temps de calcul. En outre, cette classification des cibles simplifie la décision d'activation ou non du système AES, et la décision prise est justifiable à un conducteur humain.

Sur la figure 8, on peut considérer que seule la cible C4 remplit les deux conditions i) et ii), puisqu'aucune des deux autres cibles ne remplit la condition i).

La septième étape consiste, pour le calculateur C10, à déterminer, pour chaque cible critique, un temps critique Tcrit qui intègre deux informations distinctes et pertinentes pour garantir un évitement d'obstacle en minimisant le caractère intrusif de la fonction AES pour le conducteur.

L'intérêt de calculer ce paramètre est notamment de permettre de trouver quelle est la cible la plus critique MCT parmi les cibles critiques.

Avant de décrire comment ce paramètre est obtenu, on pourra rappeler que le système AES d'évitement peut être opéré de façon entièrement automatique (auquel cas la trajectoire d'évitement est suivie par l'actionneur de direction assistée, de manière autonome) ou de façon semi-automatique (auquel cas l'évitement est réalisé manuellement par le conducteur, l'actionneur de direction assistée étant piloté pour aider le conducteur à suivre une trajectoire d'évitement une fois que le conducteur a déclenché l'évitement). Dans la suite de la description, on parlera d'un mode autonome et d'un mode manuel pour désigner respectivement ces deux méthodes.

L'évitement en mode manuel est potentiellement moins efficace que l'évitement en mode autonome. Ainsi, la trajectoire d'évitement calculée par le système AES ne sera pas la même en mode manuel et en mode autonome. On notera que le calcul de cette trajectoire d'évitement (en forme de clothoïde) ne fait pas l'objet de la présente invention. On pourra simplement rappeler que la forme de cette trajectoire est calculée en fonction des performances dynamiques du véhicule et des capacités du conducteur (en mode manuel).

Quoi qu'il en soit, compte tenu des écarts $E_{right}$, $E_{left}$ calculés, il est possible de construire quatre trajectoires d'évitements (quatre clothoïdes) pour éviter la cible critique par la droite et par la gauche, en mode manuel et en mode autonome.

Ces clothoïdes présentent des courbures qui dépendent des capacités dynamiques maximum du véhicule. La forme de ces clothoïdes est alors lue dans une base de données, en fonction de la vitesse du véhicule EGO 10.

Compte tenu de ces écarts et des trajectoires d'évitement déterminées, il est possible d'en déduire quatre temps de manœuvre TTS (voir figure 7) qui correspondent à la durée nécessitée, dans chaque mode, pour réaliser la manœuvre d'évitement par la gauche ou par la droite.

La manière d'obtenir ces temps de manœuvre TTS ne sera pas ici décrite puisqu'elle dépendra des caractéristiques dynamiques du véhicule automobile EGO 10 et des performances du conducteur. En pratique, ces temps de manœuvre TTS pourraient être lus dans une base de données établies à l'aide d'une batterie d'essais.

Connaissant le temps avant collision TTC et le temps de manœuvre TTS pour chaque cible critique, le calculateur peut en déduire le temps critique Tcrit à l'aide de la formule :

[Math. 29]

$$Tcrit = TTC - TTS$$

Ce temps critique devient donc nul au dernier moment où il est encore possible d'activer la fonction AES et d'éviter la collision avec la cible critique considérée, dans le mode manuel ou automatique considéré, en l'évitant par le côté considéré.

Ainsi, ce temps critique Tcrit est porteur de trois informations capitales sur la cible considérée : le côté par lequel l'éviter, la performance du système (et du conducteur) et la durée avant collision TTC avec la cible.

La huitième étape va alors consister à utiliser les temps critiques Tcrit calculés pour classer les cibles critiques et trouver la cible la plus critique MCT.

Dans le cas où le conducteur est maître de la manœuvre en mode manuel (par exemple parce que le mode autonome n'a pas pu s'activer), le calculateur sélectionne la cible critique pour laquelle le temps critique est le plus faible en cas d'évitement par la droite et celle pour laquelle le temps critique est le plus faible en cas d'évitement par la gauche.

Puis, dès que le calculateur C10 détecte que le conducteur initie une manœuvre d'évitement, il peut décider d'activer le système AES pour aider le conducteur dans sa manœuvre en fonction des deux temps critiques sélectionnés.

Pour cela, le calculateur détermine le côté vers lequel le conducteur tourne le volant lorsqu'il commence sa manœuvre d'évitement (par la droite ou par la gauche), puis il élit, parmi les deux temps critiques sélectionnés, celui correspondant au côté par lequel le conducteur commence sa manœuvre d'évitement.

La cible la plus critique MCT est celle correspondant à ce temps critique élu.

En mode autonome, le calculateur procède autrement. Il est en effet nécessaire de déterminer le côté par lequel le véhicule EGO 10 doit éviter le ou les obstacles.

L'idée est alors de déterminer, pour chaque cible critique, le meilleur côté pour l'éviter puis de déterminer ensuite la cible la plus critique MCT.

Pour bien comprendre comment le calculateur procède, on peut se référer à la figure 7.

Dans cet exemple, on a calculé les valeurs des paramètres précités, ce qui permet de construire le tableau suivant.

[Tab. 2]

| Cible | $E_{left}$ | $E_{right}$ | TTS/gauche | TTS/droite | TTC | Tcrit/gauche | Tcrit/droit |
|-------|------------|-------------|------------|------------|-----|--------------|-------------|
| $C_1$ | 3.5 | 1.5 | 4 | 2 | 2.7 | -1.3 | 0.7 |
| $C_2$ | 4 | 1 | 4.3 | 1.7 | 3.2 | -1.1 | 1.5 |
| $C_3$ | 0.5 | 4.5 | 1 | 4.6 | 1.5 | 0.5 | -3.1 |

On observe que la cible $C_3$ n'est évitable que par la gauche et que les autres ne sont évitables que par la droite.

En pratique, le calculateur sélectionne, pour chaque cible critique, le côté pour lequel le temps critique Tcrit est le plus élevé.

Puis il élit, parmi les temps critiques ainsi sélectionnés, celui qui est le plus faible.

Alors, le calculateur considère que la cible la plus critique MCT est celle dont le temps critique Tcrit a été élu. Il s'agit ici de la cible $C_3$.

La neuvième étape consiste pour le calculateur C10 à déclencher la fonction AES si cela est nécessaire et au moment optimal.

En l'espèce, en mode autonome, la fonction AES est déclenchée dès que le temps critique Tcrit élu passe sous un seuil prédéterminé, par exemple égal à 0 seconde.

En revanche, en mode manuel, le déclenchement de cette fonction AES s'opère de façon différente.

L'idée est de déclencher la fonction AES et l'accompagnement du conducteur dans l'évitement d'une manière qui s'adapte à la situation.

En effet, si le conducteur initie trop tôt son coup de volant, sa manoeuvre sera considérée comme non urgente car la situation ne requiert pas une action du conducteur de ce type à ce moment. Le système AES ne sera alors pas activé.

De même, si une collision est imminente et si le mode autonome n'a pas pu s'activer avant, alors on pourra considérer qu'il sera trop tard pour que le système AES puisse apporter une quelconque aide au conducteur. On laissera alors le soin à un autre système de sécurité de minimiser l'impact.

Ainsi, en mode manuel, il sera nécessaire de déterminer un intervalle de temps pendant lequel, si une action d'évitement effectuée par le conducteur est détectée, le système AES sera activé.

Cet intervalle de temps sera délimité par deux bornes.

La première borne, à partir de laquelle, si le conducteur initie une manoeuvre d'évitement, il sera aidé, correspondra à un temps critique Tcrit strictement supérieur à 0.

La seconde borne, à partir de laquelle on considérera qu'il est trop tard pour déclencher le système AES, correspond à un temps critique Tcrit inférieur ou égal à 0, et de préférence strictement inférieur à 0.

Ainsi, pour activer la fonction AES, le calculateur détermine si le temps critique Tcrit élu est compris entre ces deux bornes, et il active la fonction AES que si tel est le cas.

La présente invention n'est nullement limitée au mode de réalisation décrit et représenté, mais l'homme du métier saura y apporter toute variante conforme à l'invention telle que revendiquée.

**Revendications**

1. Procédé de déclenchement d'un système d'évitement d'obstacle (AES) pour véhicule automobile (10) roulant sur une route, comportant des étapes de :

    - détection d'au moins un objet (C1, C2) situé dans l'environnement du véhicule automobile (10) et acquisition de données relatives à chaque objet (C1, C2) détecté,
    - détermination, pour ledit au moins un objet (C1, C2), d'un paramètre (TTC) relatif au temps restant avant que le véhicule automobile ne puisse percuter ledit objet (C1, C2), en fonction des données acquises,
    - détermination d'au moins un écart de trajectoire ($E_{left}$, $E_{right}$) à réaliser pour éviter ledit au moins un objet (C1, C2), et
    - activation du système d'évitement d'obstacle (AES) pour éviter ledit au moins un objet (C1, C2) selon les valeurs dudit paramètre (TTC) et de chaque écart de trajectoire ($E_{left}$, $E_{right}$),
    dans lequel ladite étape de détermination d'au moins un écart de trajectoire ($E_{left}$, $E_{right}$) comporte :

    - le calcul d'une vitesse latérale relative ($VRelRoute_{Lat}$) en fonction de l'écart entre, d'une part, la vitesse latérale ($Vy_{Ego/LineEgo}$) du véhicule automobile (10) par rapport à la route dans un premier repère ($X_{LineEgo}$, $Y_{LineEgo}$) orienté selon une tangente à la route au niveau du véhicule automobile (10), et, d'autre part, la vitesse latérale ($Vy_{Obj/LineObj}$) de l'objet (C1, C2) par rapport à la route dans un second repère ($X_{LineObj}$, $Y_{LineObj}$) orienté selon une tangente à la route au niveau dudit objet (C1, C2), et
    - la détermination de chaque écart de trajectoire ($E_{left}$, $E_{right}$) en fonction de la vitesse latérale relative ($VRelRoute_{Lat}$).

2. Procédé de déclenchement selon la revendication précédente, dans lequel ledit écart de trajectoire ($E_{left}$, $E_{right}$) est déterminé en fonction également dudit paramètre (TTC) et en fonction d'un angle ($Angle_{Obj/LineObj}$) formé entre le vecteur vitesse de l'objet (C1, C2) et la tangente à la route au niveau dudit objet (C1, C2).

3. Procédé de déclenchement selon l'une des revendications précédentes, dans lequel l'étape de détermination dudit paramètre (TTC) comporte :

- le calcul d'une distance d'arc ($L_{AB}$) entre le véhicule automobile (10) et ledit objet (C1, C2),
- le calcul d'une vitesse longitudinale relative ($VRelRoute_{Long}$) en fonction de l'écart entre, d'une part, la vitesse longitudinale ($Vx_{Ego/LineEgo}$) du véhicule automobile (10) par rapport à la route dans le premier repère ($X_{LineEgo}$, $Y_{LineEgo}$), et, d'autre part, la vitesse longitudinale ($Vx_{Obj/LineObj}$) de l'objet (C1, C2) par rapport à la route dans le second repère ($X_{LineObj}$, $Y_{LineObj}$),
- le calcul d'une accélération longitudinale relative ($ARelRoute_{Long}$) en fonction de l'écart entre, d'une part, l'accélération longitudinale ($Ax_{Ego/LineEgo}$) du véhicule automobile (10) par rapport à la route dans le premier repère ($X_{LineEgo}$, $Y_{LineEgo}$), et, d'autre part, l'accélération longitudinale ($Ax_{Obj/LineObj}$) de l'objet (C1, C2) par rapport à la route dans le second repère ($X_{LineObj}$, $Y_{LineObj}$), et
- la détermination dudit paramètre (TTC) en fonction de la vitesse longitudinale relative ($VRelRoute_{Long}$), de l'accélération longitudinale relative ($ARelRoute_{Long}$) et de la distance d'arc ($L_{AB}$).

4. Procédé de déclenchement selon l'une des revendications précédentes, dans lequel il est prévu une étape de calcul d'un temps de manoeuvre (TTS) nécessaire pour éviter ledit objet (C1, C2) en fonction dudit écart de trajectoire ($E_{left}$, $E_{right}$) et dans lequel l'activation du système d'évitement d'obstacle (AES) est réalisée selon ledit temps de manoeuvre (TTS).

5. Procédé de déclenchement selon la revendication précédente, dans lequel il est prévu une étape de calcul d'un temps critique (Tcrit) relatif au temps restant pour éviter ledit objet (C1, C2) en toute sécurité, en fonction du temps de manoeuvre (TTS) et dudit paramètre (TTC), et dans lequel l'activation du système d'évitement d'obstacle (AES) est réalisée selon ledit temps critique (Tcrit).

6. Procédé de déclenchement selon la revendication 5, dans lequel, pour activer le système d'évitement d'obstacle (AES) de telle sorte qu'il réalise l'évitement sans intervention du conducteur du véhicule automobile (10) lorsque plusieurs objets (C1, C2) ont été détectés, il est prévu de :

- calculer, pour chaque objet (C1, C2), un temps critique (Tcrit) pour éviter ledit objet (C1, C2) par la gauche et un temps critique (Tcrit) pour éviter ledit objet (C1, C2) par la droite,
- de sélectionner, pour chaque objet (C1, C2), le plus grand des deux temps critiques (Tcrit) calculés, puis
- d'élire le temps critique (Tcrit) le plus faible parmi les temps critiques sélectionnés, et

dans lequel l'activation du système d'évitement (AES) est réalisée selon ledit temps critique (Tcrit) élu.

7. Procédé de déclenchement selon la revendication 5, dans lequel, pour

activer le système d'évitement d'obstacle (AES) de telle sorte qu'il réalise l'évitement compte tenu de l'action du conducteur du véhicule automobile (10) sur le volant lorsque plusieurs objets (C1, C2) ont été détectés, il est prévu de :

- calculer, pour chaque objet (C1, C2), un temps critique (Tcrit) pour éviter ledit objet (C1, C2) par la gauche et un temps critique (Tcrit) pour éviter ledit objet (C1, C2) par la droite,
- sélectionner le plus petit des temps critiques (Tcrit) calculés pour réaliser un évitement par la gauche,
- sélectionner le plus petit des temps critiques (Tcrit) calculés pour réaliser un évitement par la droite, et

dans lequel l'activation du système d'évitement (AES) est réalisée en fonction du moment auquel le conducteur du véhicule automobile (10) initie un évitement et en fonction de l'un des deux temps critiques (Tcrit) sélectionnés, à savoir celui qui est associé à un évitement par le côté vers lequel le conducteur du véhicule automobile (10) initie un évitement.

8. Procédé de déclenchement selon l'une des revendications 5 à 7, dans

lequel il est prévu une étape de filtrage des objets (C1, C2) détectés au cours de laquelle :

- on détermine une distance ($Lane_{DY}$) entre chaque objet (C1, C2) et une ligne de séparation de voies (NL, L, R, NR),
- on sélectionne les objets (C1, C2) dont la vitesse relative latérale ($VRelRoute_{Lat}$) est supérieure à un seuil déduit de ladite distance (Lane$_{DY}$), et

dans lequel l'étape de calcul du temps critique (Tcrit) est mise en œuvre uniquement pour les objets sélectionnés.

9. Procédé de déclenchement selon l'une des revendications précédentes,

dans lequel il est prévu une étape de filtrage de l'objet (C1, C2) détectés au cours de laquelle :

- on détermine les positions des objets (C1, C2) par rapport à des voies de circulation de la route,
- on sélectionne les objets (C1, C2) situés sur les voies de circulation de la route et pour lesquels le paramètre (TTC) est inférieur à un seuil prédéterminé, et

dans lequel l'étape de calcul du temps critique (Tcrit) est mise en œuvre uniquement pour les objets sélectionnés.

10. Véhicule automobile (10) comportant au moins une roue directrice, un système de direction de chaque roue directrice adapté à être manoeuvré par un actionneur commandé par un calculateur (C10), dans lequel le calculateur (C10) est adapté à mettre en œuvre un procédé de déclenchement conforme à l'une des revendications précédentes.

## Patentansprüche

1. Verfahren zur Auslösung eines Hindernisausweichsystems (AES) für ein Kraftfahrzeug (10), das auf einer Straße fährt, das folgende Schritte beinhaltet:

- Detektieren wenigstens eines Objekts (C1, C2), das sich im Umfeld des Kraftfahrzeugs (10) befindet, und Erfassen von Daten in Bezug auf jedes detektierte Objekt (C1, C2),
- Bestimmen, für das wenigstens eine Objekt (C1, C2), eines Parameters (TTC) in Bezug auf die verbleibende Zeit, bevor das Kraftfahrzeug mit dem Objekt (C1, C2), kollidieren kann, je nach den erfassten Daten,
- Bestimmen wenigstens einer Bewegungsbahnabweichung (E$_{left}$, E$_{right}$), die durchzuführen ist, um dem wenigstens einen Objekt (C1, C2) auszuweichen, und
- Aktivieren des Hindernisausweichsystems (AES), um dem wenigstens einen Objekt (C1, C2) auszuweichen, entsprechend den Werten des Parameters (TTC) und jeder Bewegungsbahnabweichung (E$_{left}$, E$_{right}$),

wobei der Schritt des Bestimmens wenigstens einer Bewegungsbahnabweichung (E$_{left}$, E$_{right}$) Folgendes beinhaltet:

- das Berechnen einer relativen Seitengeschwindigkeit (VRelRoute$_{Lat}$) je nach der Abweichung zwischen einerseits der Seitengeschwindigkeit (Vy$_{Ego/LineEgo}$) des Kraftfahrzeugs (10) im Verhältnis zur Straße in einem ersten Koordinatensystem (X$_{LineEgo}$, Y$_{LineEgo}$), das gemäß einer Tangente zur Straße im Bereich des Kraftfahrzeugs (10) orientiert ist, und andererseits der Seitengeschwindigkeit (Vy$_{Obj/LineObj}$) des Objekts (C1, C2) im Verhältnis zur Straße in einem zweiten Koordinatensystem (X$_{LineObj}$, Y$_{LineObj}$) das gemäß einer Tangente zur Straße im Bereich des Objekts (C1, C2) orientiert ist, und
- das Bestimmen jeder Bewegungsbahnabweichung (E$_{left}$, E$_{right}$) je nach der relativen Seitengeschwindigkeit (VRelRoute$_{Lat}$).

2. Auslöseverfahren nach dem vorhergehenden Anspruch, wobei die Bewegungsbahnabweichung (E$_{left}$, E$_{right}$) ebenfalls je nach dem Parameter (TTC) und je nach einem Winkel (Angle$_{Obj/LineObj}$), der zwischen dem Geschwindigkeitsvektor des Objekts (C1, C2) und der Tangente zur Straße im Bereich des Objekts (C1, C2) gebildet ist, bestimmt wird.

3. Auslöseverfahren nach einem der vorhergehenden Ansprüche, wobei der Schritt des Bestimmens des Parameters (TTC) Folgendes beinhaltet:

- das Berechnen einer Bogenstrecke (L$_{AB}$) zwischen dem Kraftfahrzeug (10) und dem Objekt (C1, C2),
- das Berechnen einer relativen Längsgeschwindigkeit (VRelRoute$_{Long}$) je nach der Abweichung zwischen einerseits der Längsgeschwindigkeit (Vx$_{Ego/LineEgo}$) des Kraftfahrzeugs (10) im Verhältnis zur Straße im ersten Koordinatensystem (X$_{LineEgo}$, Y$_{LineEgo}$) und andererseits, der Längsgeschwindigkeit (Vx$_{Obj/LineObj}$) des Objekts (C1, C2) im Verhältnis zur Straße im zweiten Koordinatensystem (X$_{LineObj}$, Y$_{LineObj}$),
- das Berechnen einer relativen Längsbeschleunigung (ARelRoute$_{Long}$) je nach der Abweichung zwischen einerseits der Längsbeschleunigung (Ax$_{Ego/LineEgo}$) des Kraftfahrzeugs (10) im Verhältnis zur Straße im ersten Koordinatensystem ($X_{LineEgo}$, $Y_{LineEgo}$) und andererseits der Längsbeschleunigung ($Ax_{Obj/LineObj}$) des Objekts (C1, C2) im Verhältnis zur Straße im zweiten Koordinatensystem ($X_{LineObj}$, $Y_{LineObj}$), und
- das Bestimmen des Parameters (TTC) je nach der relativen Längsgeschwindigkeit ($VRelRoute_{Long}$), der relativen Längsbeschleunigung ($ARelRoute_{Long}$) und der Bogenstrecke ($L_{AB}$).

4. Auslöseverfahren nach einem der vorhergehenden Ansprüche, wobei ein Schritt des Berechnens einer Manövrierzeit (TTS) vorgesehen ist, die erforderlich ist, um dem Objekt (C1, C2) je nach der Bewegungsbahnabweichung ($E_{left}$, $E_{right}$) auszuweichen, und wobei die Aktivierung des Hindernisausweichsystems (AES) entsprechend der Manövrierzeit (TTS) durchgeführt wird.

5. Auslöseverfahren nach dem vorhergehenden Anspruch, wobei ein Schritt des Berechnens einer kritischen Zeit (Tcrit) in Bezug auf die verbleibende Zeit, um dem Objekt (C1, C2) sicher auszuweichen, je nach der Manövrierzeit (TTS) und dem Parameter (TTC) vorgesehen ist, und wobei die Aktivierung des Hindernisausweichsystems (AES) entsprechend der kritischen Zeit (Tcrit) durchgeführt wird.

6. Auslöseverfahren nach Anspruch 5, wobei, um das Hindernisausweichsystems (AES) so zu aktivieren, dass es das Ausweichen ohne Eingriff des Fahrers des Kraftfahrzeugs (10) durchführt, wenn mehrere Objekte (C1, C2) detektiert worden sind, Folgendes vorgesehen ist:

   - Berechnen einer kritischen Zeit (Tcrit) für jedes Objekt (C1, C2), um dem Objekt (C1, C2) nach links auszuweichen, und einer kritischen Zeit (Tcrit), um dem Objekt (C1, C2) nach rechts auszuweichen,
   - Auswählen, für jedes Objekts (C1, C2), der größten der zwei berechneten kritischen Zeiten (Tcrit), dann
   - Wählen der kleinsten kritischen Zeit (Tcrit) aus den ausgewählten kritischen Zeiten, und

   wobei die Aktivierung des Ausweichsystems (AES) entsprechend der gewählten kritischen Zeit (Tcrit) durchgeführt wird.

7. Auslöseverfahren nach Anspruch 5, wobei, um das Hindernisausweichsystem (AES) so zu aktivieren, dass es das Ausweichen unter Berücksichtigung der Einwirkung des Fahrers des Kraftfahrzeugs (10) auf das Lenkrad durchführt, wenn mehrere Objekte (C1, C2) detektiert worden sind, Folgendes vorgesehen ist:

   - Berechnen einer kritischen Zeit (Tcrit) für jedes Objekt (C1, C2), um dem Objekt (C1, C2) nach links auszuweichen, und einer kritischen Zeit (Tcrit), um dem Objekt (C1, C2) nach rechts auszuweichen,
   - Auswählen der kleinsten der kritischen Zeiten (Tcrit), die zur Durchführung eines Ausweichens nach links berechnet wurden,
   - Auswählen der kleinsten der kritischen Zeiten (Tcrit), die zur Durchführung eines Ausweichens nach rechts berechnet wurden, und

   wobei die Aktivierung des Ausweichsystems (AES) je nach dem Zeitpunkt, zu dem der Fahrer des Kraftfahrzeugs (10) ein Ausweichen einleitet, und je nach einem der zwei ausgewählten kritischen Zeiten (Tcrit) durchgeführt wird, und zwar jener, die einem Ausweichen auf der Seite, zu welcher der Fahrer des Kraftfahrzeugs (10) ein Ausweichen einleitet, zugeordnet ist.

8. Auslöseverfahren nach einem der Ansprüche 5 bis 7, wobei ein Schritt des Filterns der detektierten Objekte (C1, C2) vorgesehen ist, bei dem:

   - eine Entfernung ($Lane_{DY}$) zwischen jedem Objekt (C1, C2) und einer Spurtrennlinie (NL, L, R, NR) bestimmt wird,
   - die Objekte (C1, C2) ausgewählt werden, deren relative Seitengeschwindigkeit ($VRelRoute_{Lat}$) höher als ein Schwellenwert ist, der von der Entfernung ($Lane_{DY}$) abgeleitet wird, und

   wobei der Schritt des Berechnens der kritischen Zeit (Tcrit) nur für die ausgewählten Objekte durchgeführt wird.

9. Auslöseverfahren nach einem der vorhergehenden Ansprüche, wobei ein Schritt des Filterns der detektierten Objekte (C1, C2) vorgesehen ist, bei dem:

   - die Positionen der Objekte (C1, C2) im Verhältnis zu Fahrspuren der Straße bestimmt werden,
   - die Objekte (C1, C2) ausgewählt werden, die sich auf den Fahrspuren der Straße befinden, und für die der Parameter (TTC) niedriger als ein vorbestimmter Schwellenwert ist, und

wobei der Schritt des Berechnens der kritischen Zeit (Tcrit) nur für die ausgewählten Objekte durchgeführt wird.

10. Kraftfahrzeug (10) aufweisend wenigstens ein gelenktes Rad, ein System zur Lenkung jedes gelenkten Rads, das geeignet ist, von einem Betätigungselement manövriert zu werden, das von einem Rechner (C10) gesteuert wird, wobei der Rechner (C10) geeignet ist, ein Auslöseverfahren nach einem der vorhergehenden Ansprüche durchzuführen.

**Claims**

1. Method for triggering an obstacle avoidance system (AES) for a motor vehicle (10) running on a road, comprising steps of:

   - detecting at least one object (C1, C2) situated in the environment of the motor vehicle (10) and acquiring data relating to each detected object (C1, C2),
   - determining, for said at least one object (C1, C2), a parameter (TTC) relating to the time remaining before the motor vehicle can strike said object (C1, C2), as a function of the acquired data,
   - determining at least one path deviation ($E_{left}$, $E_{right}$) to be performed to avoid said at least one object (C1, C2), and
   - activating the obstacle avoidance system (AES) to avoid said at least one object (C1, C2) according to the values of said parameter (TTC) and of each path deviation ($E_{left}$, $E_{right}$),

   wherein said step of determination of at least one path deviation ($E_{left}$, $E_{right}$) comprises:

   - calculating a relative lateral speed (VRelRoute$_{Lat}$) as a function of the deviation between, on the one hand, the lateral speed ($Vy_{Ego/LineEgo}$) of the motor vehicle (10) with respect to the road in a first reference frame ($X_{LineEgo}$, $Y_{LineEgo}$) oriented according to a tangent to the road at the motor vehicle (10), and, on the other hand, the lateral speed ($Vy_{Obj/LineObj}$) of the object (C1, C2) with respect to the road in a second reference frame ($X_{LineObj}$, $Y_{LineObj}$) oriented according to a tangent to the road at said object (C1, C2), and
   - determining each path deviation ($E_{left}$, $E_{right}$) as a function of the relative lateral speed (VRelRoute$_{Lat}$).

2. Triggering method according to the preceding claim, wherein said path deviation ($E_{left}$, $E_{right}$) is determined also as a function of said parameter (TTC) and as a function of an angle (Angle$_{Obj/LineObj}$) formed between the speed vector of the object (C1, C2) and the tangent to the road at said object (C1, C2).

3. Triggering method according to one of the preceding claims, wherein the step of determination of said parameter (TTC) comprises:

   - calculating an arc distance ($L_{AB}$) between the motor vehicle (10) and said object (C1, C2),
   - calculating a relative longitudinal speed (VRelRoute$_{Long}$) as a function of the deviation between, on the one hand, the longitudinal speed ($Vx_{Ego/LineEgo}$) of the motor vehicle (10) with respect to the road in the first reference frame ($X_{LineEgo}$, $Y_{LineEgo}$), and, on the other hand, the longitudinal speed ($Vx_{Obj/LineObj}$) of the object (C1, C2) with respect to the road in the second reference frame ($X_{LineObj}$, $Y_{LineObj}$),
   - calculating a relative longitudinal acceleration (ARelRoute$_{Long}$) as a function of the deviation between, on the one hand, the longitudinal acceleration ($Ax_{Ego/LineEgo}$) of the motor vehicle (10) with respect to the road in the first reference frame ($X_{LineEgo}$, $Y_{LineEgo}$), and, on the other hand, the longitudinal acceleration ($Ax_{obj/LineObj}$) of the object (C1, C2) with respect to the road in the second reference frame ($X_{LineObj}$, $Y_{LineObj}$), and
   - determining said parameter (TTC) as a function of the relative longitudinal speed (VRelRoute$_{Long}$), of the relative longitudinal acceleration (ARelRoute$_{Long}$) and of the arc distance ($L_{AB}$).

4. Triggering method according to one of the preceding claims, wherein a step is provided for calculating a maneuvering time (TTS) necessary to avoid said object (C1, C2) as a function of said path deviation ($E_{left}$, $E_{right}$) and wherein the activation of the obstacle avoidance system (AES) is performed according to said maneuvering time (TTS).

5. Triggering method according to the preceding claim, wherein a step is provided for calculating a critical time (Tcrit) relative to the time remaining to avoid said object (C1, C2) in total safety, as a function of the maneuvering time (TTS) and of said parameter (TTC), and wherein the activation of the obstacle avoidance system (AES) is performed according to said critical time (Tcrit).

6. Triggering method according to Claim 5, wherein, to activate the obstacle avoidance system (AES) such that it performs the avoidance without intervention from the driver of the motor vehicle (10) when several objects (C1, C2) have been detected, provision is made to:

   - calculate, for each object (C1, C2), a critical time (Tcrit) to avoid said object (C1, C2) by the left and a critical time (Tcrit) to avoid said object (C1, C2) by the right,
   - select, for each object (C1, C2), the greater of the two calculated critical times (Tcrit), then
   - elect the lowest critical time (Tcrit) from among the selected critical times, and

   wherein the activation of the avoidance system (AES) is performed according to said elected critical time (Tcrit).

7. Triggering method according to Claim 5, wherein, to activate the obstacle avoidance system (AES) such that it performs the avoidance given action from the driver of the motor vehicle (10) on the steering wheel when several objects (C1, C2) have been detected, provision is made to:

   - calculate, for each object (C1, C2), a critical time (Tcrit) to avoid said object (C1, C2) by the left and a critical time (Tcrit) to avoid said object (C1, C2) by the right,
   - select the smaller of the calculated critical times (Tcrit) to perform an avoidance by the left,
   - select the smallest of the calculated critical times (Tcrit) to perform an avoidance by the right, and wherein the activation of the avoidance system (AES) is performed as a function of the moment at which the driver of the motor vehicle (10) initiates an avoidance and as a function of one of the two selected critical times (Tcrit), namely that which is associated with an avoidance by the side to which the driver of the motor vehicle (10) initiates an avoidance.

8. Triggering method according to one of Claims 5 to 7, wherein a step is provided for filtering detected objects (C1, C2) during which:

   - a distance ($Lane_{DY}$) is determined between each object (C1, C2) and a lane separation line (NL, L, R, NR),
   - the objects (C1, C2) for which the lateral relative speed ($VRelRoute_{Lat}$) is greater than a threshold deduced from said distance ($Lane_{DY}$) are selected, and

   wherein the step of calculating the critical time (Tcrit) is implemented only for the selected objects.

9. Triggering method according to one of the preceding claims, wherein a step is provided for filtering detected objects (C1, C2) during which:

   - the positions of the objects (C1, C2) are determined with respect to road traffic lanes,
   - the objects (C1, C2) situated on the road traffic lanes and for which the parameter (TTC) is less than a predetermined threshold are selected, and

   wherein the step of calculating the critical time (Tcrit) is implemented only for the selected objects.

10. Motor vehicle (10) comprising at least one drive wheel, a steering system for each drive wheel suitable for being maneuvered by an actuator controlled by a computer (C10), wherein the computer (C10) is suitable for implementing a triggering method in accordance with one of the preceding claims.

## Fig.1

## Fig.2

## Fig.3

## Fig.4

## Fig.5

## Fig.6

# Fig.7

# Fig.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3077547

- FR 1907351

**Littérature non-brevet citée dans la description**

- **C. LIENKE** ; **C. WISSING** ; **M. KELLER** ; **T. NATTERMANN** ; **T. BERTRAM**. Predictive Driving: Fusing Prediction and Planning for Automated Highway Driving. *IEEE Transactions on Intelligent Vehicles*, September 2019, vol. 4 (3), 456-467

- **J. KIM** ; **K. JO** ; **W. LIM** ; **M. LEE** ; **M. SUNWOO**. Curvilinear-Coordinate-Based Object and Situation Assessment for Highly Automated Vehicles. *IEEE Transactions on Intelligent Transportation Systems*, June 2015, vol. 16 (3), 1559-1575